# EUROPEAN PATENT APPLICATION

(11) **EP 3 364 290 A2**
(43) Date of publication of application: **22.08.2018**
(21) Application number: 18157726.3
(22) Date of filing: 20.02.2018
(51) Int. Cl.: G06F 8/38, G06F 9/451

(54) **SYSTEM AND METHOD FOR GENERATING A DYNAMIC RUNTIME-MODIFIABLE USER INTERFACE AND BINDING**

(30) Priority: 20.02.2017 EP 17156831
(71) Applicant: Gebauer GmbH, 42653 Solingen (DE)
(72) Inventor: Gebauer, Boris, 42719 Solingen (DE)
(74) Representative: Raffay & Fleck

(57) **Abstract**

A computer system including hardware and software, and a method of using the same to modify a interface or window without having to recompile. The window, or graphical user interface, is modifiable or extensible at runtime (post-compile) and might be displayed on the computer system's display. The method includes generating at least one runtime-modifiable component during runtime with the computer system's processor and providing a runtime modifiable configuration of the graphical user interface together with a generic loader function. A method of binding during runtime includes binding an element using a generic binding engine thus allowing to add, modify or drop elements in the post-compile adaptation of the system since both - the data source as well as the interface definition are stored in a way that they can be modified at runtime.

## Description

The present disclosure concerns a system and method for generating a dynamic binding and/or user interface at runtime.

US Patent No. 5,832,481 (Sheffield) discloses a repository that contains information on columns and tables beyond the classical definitions of columns and tables. The repository can be used, for example, to create dialogs, masks, and interfaces. The information stored therein is utilized to display formats, labels, etc.

Furthermore, it is known, for example, from the POWERSOFT® DATAWINDOW® Extended Attribute Synchronizer (DWEAS), that values in the repository can be changed at runtime and transferred from the created objects. [POWERSOFT is a registered trademark of Powersoft Corporation of Burlington, Massachusetts, US and DATAWINDOW is a registered trademark of Sybase, Inc. of Dublin, California, US.]

In addition, it is known for object-oriented programming to provide class descriptions or object models (for example, in XML) from which objects can be generated.

From DE 10 2004 008 258 A1 (Dorn et al) it is also known to generate new objects at runtime from such class descriptions.

It is also known that mapping between a dataset and tables might be stored in a database to facilitate or simplify interaction. This is known, for example, in the context of object relational relations (ORM). This is usually done using a data binding engine that converts the binding at runtime. Prior art references that discuss the use of data binding engines include US 7,653,880 (Peters et al) and US2006/0212842 (Gossman et al).

US 9,582,254 (Krishnamurthy) discloses a method for generating runtime-components in a hardware and software system.

It is also known to define graphical user interfaces such as windows, masks or dialogs in structured files, for example in XAML, as known from Windows Presentation Foundation (WPF). This allows easy modification and storage. The structured description is compiled before execution. It is also possible to bind variables or data sources. For example, a label can be bound to a variable (here MyLabel) :

```
 < Label Width = "200" Height = "50" Content = "{Binding MyLabel}"/>
```

In this way, it is possible to adjust individual bound contents (data) at runtime and to display this change (data) in the windows. The text of the label can, for example, at runtime, reflect the content of a variable to which it is bound (e. g. MyLabel) and can thus be changed.

The present disclosure provides a system and method to enable adaption of an application beyond the known PRIOR ART scope at runtime. For example, the present disclosure provides a system and method that enables a user to modify a window, modify, add and/or remove parts of a window, such as a label and/or text input box, without having to recompile. Such window, called as well a graphical user interface of the system is also adaptable and/or extensible at runtime and thus allows for (post-compile/during runtime) adaptations of the system. Such window, called as well a graphical user interface might be displayed on a display.

This is being accomplished by externalizing the configuration of the user-interface (e.g. as a file) and/or the data-source-configuration or binding configuration in order to make them modifiable at runtime.

Preferably both configurations (configuration of the user-interface and binding configuration, which might be stored together, even in one file) are then loaded into a generic binding engine and/or loader, respectively, to facilitate the display of the data as well as writing back any changes that were made on the user-interface into the data source (bi-directional binding).

In one aspect, the present disclosure may provide a method for generating at least one runtime-modifiable component within a computer system, said method comprising providing a computer system including hardware and software; generating at least one runtime-modifiable component during runtime with a processor of the computer system; and displaying the at least one runtime-modifiable component, especially a graphical user interface, on a display of the computer system; wherein the at least one runtime-modifiable component corresponds to a runtime-modifiable configuration of the graphical user interface. In another aspect, the present disclosure may provide a system comprising a processing unit comprising one or more processors; a memory coupled with and readable by the processing unit; and a display; said memory storing therein a set of computer-readable instructions which, when executed by the processing unit, causes the processing unit to generate runtime-modifiable components within a hardware and software computer system; wherein the runtime-modifiable components are graphical user interfaces created by generating at least one runtime-modifiable component corresponding to at least one runtime-modifiable configuration of the graphical user interfaces and causes the computer system to display the runtime-modifiable components especially the graphical user interface on a display. The display is the monitor/screen or the like on which the runtime modifiable components (user interfaces) might be shown.

In another aspect, the present disclosure may provide a computer-readable memory comprising a memory of a hardware and software computer system; and a set of computer-readable instructions stored in the memory, which when executed by a processor of the hardware and software computer system, causes the processor to generate runtime-modifiable components within the hardware and software computer system; and the runtime-modifiable components are graphical user interfaces generated by the at least one runtime-modifiable component corresponding to at least one runtime-modifiable configuration of the graphical user interfaces and causes the processor to display the runtime-modifiable components especially the graphical user interface on a display.

In another aspect, the present disclosure may provide a method for binding within a hardware and software computer system, the method comprising loading at least one runtime-modifiable binding configuration regarding the binding of a data source of at least one control that includes reference to at least one element of the data source to be bound to the control; and binding the element to be bound by use of a, preferably design-time, generic binding engine, code and/or function in conjunction with the binding configuration. The elements and/or data source are dynamically exchangeable during runtime and are preferably structured data.

In another aspect, the present disclosure may provide a method for binding including loading at least one runtime-modifiable binding configuration including at least one link between a the data source and or an element of a data source and at least one control and binding the data source and7or the element by use of a design-time generic binding engine or design-time generic binding code to the control.

The at least one control may be a text box and/or a drop down, a radio button, a label, or any other object having a BindingSource or similar e.g. MICROSOFT® WINDOWS® forms that have a BindingSource. (MICROSOFT® and WINDOWS® are registered trademarks of Microsoft Corporation of Redmond, Washington, US.) and/or any object that allows to display, input and/or modify data which is preferably stored outside the object and/or control.

The binding configuration might be divided into several parts or files, e.g. two parts, e.g. located each in one file. Preferably a first part is included in the runtime-modifiable configuration of the graphical user interface and/or shows only references to a second and preferably last part of the binding configuration. The term "generic" as used herein may preferably be understood to define that something is usable for different objects, like different data sources and/or data objects.

The term "generic binding engine", "generic binding object, "generic binding code" and/or "generic binding function" as used herein may preferably be understood as a non-interface-specific and/or non-control-specific and/or non-data-specific and/or non-data-source-specific method and/or object that uses the binding configuration to facilitate binding between the control, controls and/or windows, and the data source and/or element of the data source, e.g. in order to allow for said modifications at runtime (i.e. no changes in source code needed which would in turn prevent runtime-changes on said interfaces).

A "generic binding object" as used herein may preferably be understood as an object that might hold data of different form, size and/or content, e.g. a class. The term "generic loader", "generic loader code" and/or "generic loader function" as used herein may preferably be understood as a non-component-specific and non-component-configuration-specific method and/or object that the runtime-modifiable configuration of the graphical user interface to facilitate generation and preferably display of the runtime-modifiable component, controls and/or window to allow for said modifications at runtime (i.e. no changes in source code needed which would in turn prevent runtime-changes on said interfaces).

In another aspect, the present disclosure may provide a system comprising a processing unit comprising one or more processors; memory coupled with and readable by the processing unit and storing therein a set of computer-readable instructions; and a design-time binding engine; wherein the set of computer-readable instructions, when executed by the processing unit, causes the processing unit to generate runtime-modifiable components within a hardware and software computer system by loading at least one runtime-modifiable binding configuration regarding the binding of a data source of at least one control that includes reference to at least one element of the data source to be bound; and binding the element to be bound by use of a design-time generic binding engine and/or generic binding code. The elements are dynamically exchangeable during runtime and are preferably structured data.

In a further aspect, the present disclosure may provide a computer-readable memory comprising a memory of a hardware and software computer system; a set of computer-readable instructions stored by the memory which, when executed by a processor of the hardware and software computer system, causes the processor to load at least one runtime-modifiable binding configuration regarding the binding of at least one control that includes reference to at least one element to be bound; and bind the element to be bound by use of a design-time generic binding engine and/or generic binding code. The elements are dynamically exchangeable during runtime and are preferably structured data.

In yet another aspect, the present disclosure may provide a method for binding within a hardware and software computer system, the method comprising loading at least one runtime-modifiable binding configuration regarding the binding of at least one control that includes reference to at least one element to be bound; and binding the element to be bound by use of a design-time generic binding engine with a processor of a hardware and software computer system.

In another aspect, the present disclosure may provide a system comprising a processing unit comprising one or more processors; memory coupled with and readable by the processing unit and storing therein a set of computer-readable instructions; and a, preferably design-time, generic binding engine; wherein the set of computer-readable instructions, when executed by the processing unit, causes the processing unit to generate runtime-modifiable components within a hardware and software computer system by loading at least one runtime-modifiable binding configuration regarding the binding of at least one control that includes reference to at least one element to be bound; and binding the element to be bound by use of, preferably design-time, generic binding engine preferably design-time and/or generic binding code. The elements are dynamically exchangeable during runtime and are preferably structured data.

In a further aspect, the present disclosure may provide a computer-readable memory comprising a set of computer-readable instructions stored in a memory of a hardware and software computer system which, when executed by a processor of the hardware and software computer system, causes the processor to generate runtime-modifiable components in the hardware and software computer system by loading at least one runtime-modifiable binding configuration regarding the binding of at least one control that includes reference to at least one element of the data source to be bound; and binding the element to be bound by use of a, preferably design-time, generic binding engine and/or generic binding code. The elements are dynamically exchangeable during runtime and are preferably structured data.

Further aspects and advantageous features are described in the following with references to drawings and examples. It will be appreciated that the illustrated element boundaries (e.g., boxes, groups of boxes, or other shapes) in the figures represent one example of the boundaries. One of ordinary skill in the art will appreciate that in some examples one element may be designed as multiple elements or that multiple elements may be designed as one element. In some examples, an element shown as an internal component of another element may be implemented as an external component and vice versa. Furthermore, elements may not be drawn to scale. The figures show:
Fig. 1 is a flow chart illustrating a hardware and software computer system utilized in the method in accordance with the present disclosure;
Fig. 2 is a flow chart illustrating a method of using the hardware and software computer system of Fig. 1;
Fig. 3 is a flow chart illustrating a method for generating a dynamic runtime-modifiable user interface using the computer system of Fig. 1;
Fig. 4 is a flow chart illustrating a method for a dynamic runtime modifiable binding using the computer system of Fig. 1;
Fig. 5 is a depiction of runtime-modifiable component, in form of a user interface in form of a windows as defined in wndPers.xaml;
Fig. 6 is a depiction of runtime-modifiable component, in form of a user interface in form of a windows as defined in wndPers2.xaml;
Fig. 7 is a screenshot of an exemplary datamodel designer showing the graphical configuration of a second part of a binding, by configuration of dataset named art referring to a data table and saved as structured dsd file (dsArt.dsd);
Fig. 8 is a screenshot of a configuration of an exemplary datapanel or runtime-modifiable component (user interface in form of a window) that carries as first part of a binding configuration a reference to the art dataset, defined in DataSourcePath; the configuration being saved in an xml file as runtime-modifiable configuration;
Fig. 9 is a screenshot of a configuration of an exemplary datapanel of Fig. 8 showing the controls being mapped to fields within the dataset Art;Fig. 10 is excerpt from the runtime-modifiable configuration xml file of the datapanel of Fig. 8 and 9; and
Fig. 11 is a diagrammatic representation of an exemplary architecture of the method or the software part of the system.

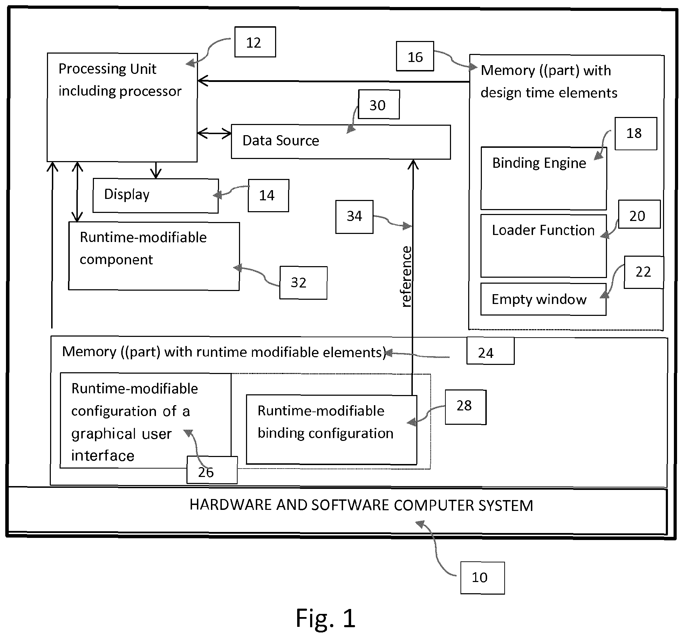

Fig. 1 shows a flow chart illustrating a hardware and software computer system utilized in the method in accordance with the present disclosure. The hardware and software computer system is generally indicated herein by the reference number 10. Computer system 10 comprises at least one processing unit 12 (that includes a processor), a display 14, and a memory. The memory includes a first part 16 that includes design time elements, a binding engine 18, a loader function 20, and an empty window 22. The memory further includes a second part 24 with runtime modifiable elements and including a runtime-modifiable configuration of a graphical user interface 26 and a runtime-modifiable binding configuration 28. Computer system 10 further includes a data source 30, a runtime modifiable component 32, and a reference 34. (Design time referenced herein may preferably be understood as the design time, which is prior to runtime/execution and binding. Furthermore a runtime-modifiable binding configuration may preferably be understood to be runtime modifiable configuration of references between objects, e.g. data sources, and components, e.g. controls. The loader function may preferably be understood as a loader, preferably a pre-runtime compiled loader.)

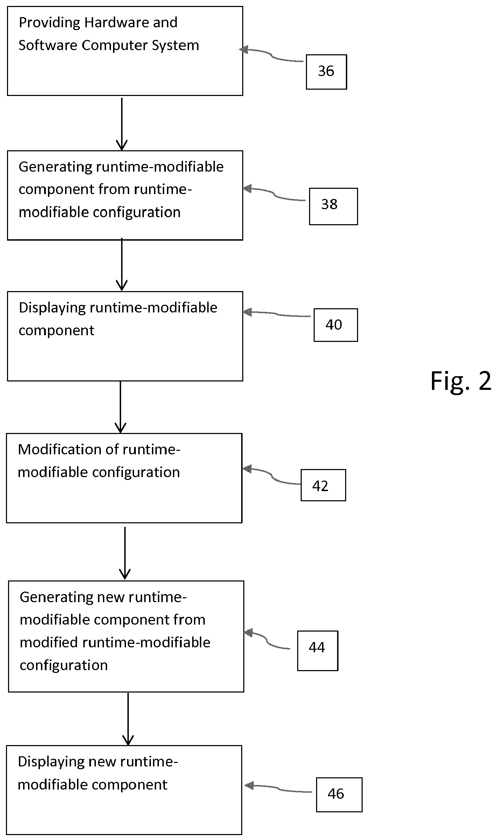

Fig. 2 is a flow chart that illustrates a method of utilizing the hardware and software computer system 10. The first step 36 comprises providing the computer system 10 of Fig. 1. A second step 38 involves generating a runtime-modifiable component from a runtime-modifiable configuration. A third step 40 is the display of the runtime-modifiable component. A fourth step 42 is the modification of the runtime-modifiable configuration. A fifth step 44 involves generating a new runtime-modifiable component from the modified-runtime modifiable configuration. A sixth step 46 includes displaying the new runtime-modifiable component. These various steps will be further described below.

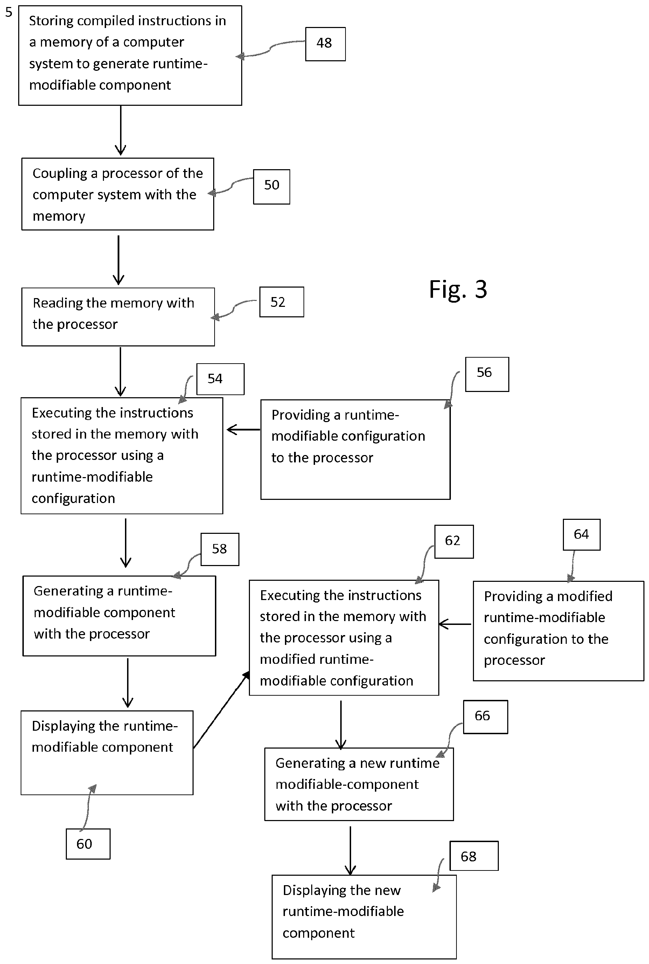

Fig. 3 shows a flow chart that further describes the method in accordance with the present disclosure. A first step illustrated in this flow chart is indicated by the reference number 48 and involves storing compiled instructions in a memory of a computer system to generate a runtime-modifiable component. In a second step 50 the processor of the computer system is coupled with the memory of the computer system. In a third step 52, the processor reads the memory and in a fourth step 54 the processor executes the instructions stored in the memory using a runtime-modifiable configuration. In a step intermediate the third step 52 and fourth step 54, indicated in Fig. 3 by the reference number 56, the runtime-modifiable configuration is provided to the processor to perform the fourth step 54. In a fifth step 58, the processor generates the runtime-modifiable component and then in a sixth step 60, the runtime-modifiable component is displayed on a computer monitor or screen. In a seventh step 62 the processor executes instructions stored in the memory using a modified runtime configuration. In a step 64 intermediate the sixth step 60 and the seventh step 62, a modified runtime-modifiable configuration is provided to the processor for the performance of the seventh step 62. In an eighth step 66, the processor generates a new runtime-modifiable component and in a ninth step 68 the new runtime-modifiable component is displayed on the computer monitor or screen.

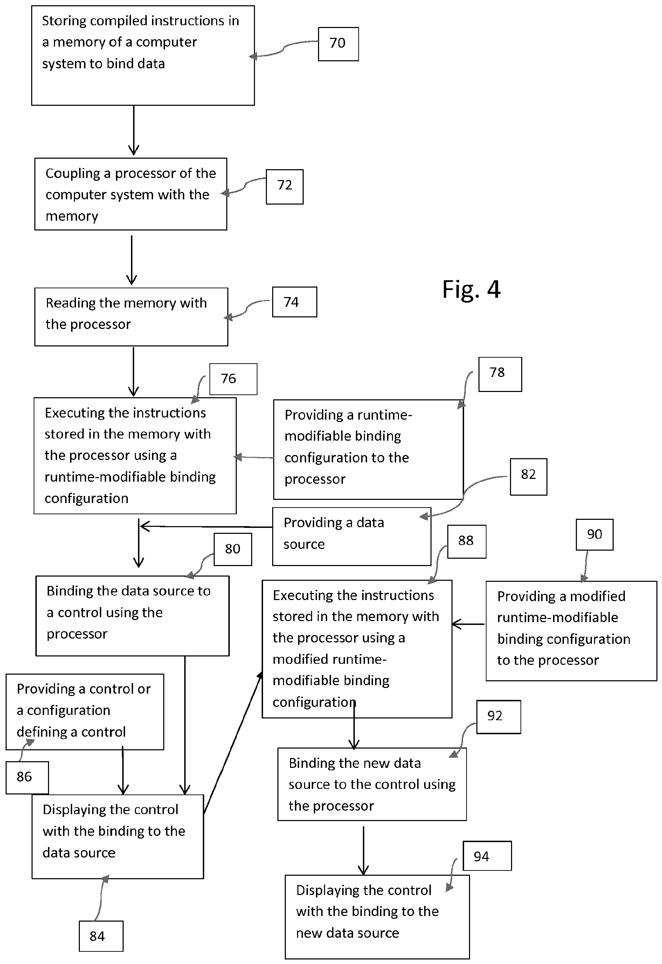

Fig. 4 is a flow chart that further describes the method in accordance with the present disclosure. A first step 70 comprises storing compiled instructions in a memory of a computer system to bind data. A second step 72 comprises coupling a processor of the computer system with the memory. A third step 74 comprises reading the memory with the processor. A fourth step 76 comprises executing the instructions stored in the memory with the processor using a runtime-modifiable binding configuration. Prior to fourth step 76, the method includes an intermediate step 78 of providing a runtime-modifiable binding configuration to the processor. A fifth step 80 comprises binding the data source to a control using the processor. Prior to fifth step 80, the method includes an intermediate step 82 of providing a data source and an intermediate step 86 of providing a control or a configuration defining a control. A sixth step 84 comprises displaying the control with the binding to the data source. A seventh step 88 comprises executing the instructions stored in the memory with the processor using a modified runtime-modifiable binding configuration. Prior to the seventh step 88, the method includes an intermediate step 90 of providing a modified runtime-modifiable binding configuration to the processor. An eighth step 92 comprises binding the new data source to the control using the processor. A ninth step 94 comprises displaying the control with the binding to the new data source.

The method in accordance with the present disclosure may be described generally as follows. At least one runtime modifiable configuration of a graphical user interface (e.g. wndPers.xaml) is provided together with a design-time generic loader function (e.g. LoadContent) and preferably an design-time generic object, e.g. a design-time generic, especially, empty window (e.g. generic_window.xaml) are provided. The modifiable configuration is loaded by the processor and processed by invoking the loader function to generate a runtime modifiable object (e.g. Fig. 1) which then might be displayed on a display or screen, preferably inside the design-time generic object, e.g. empty window.

The runtime modifiable configuration might be changed (e.g. wndPers2.xaml) and such changed runtime modifiable configuration might be processed by the processor invoking the loader function (e.g. LoadContent) to generate a new version of the runtime modifiable object (e.g. Fig. 2) that might be displayed again within such design-time generic object (window (e.g. generic_window.xaml)) on a display or screen.

Regarding another aspect at least one runtime modifiable binding configuration (e.g. as included in the runtime modifiable configuration of a graphical user interface in wndPers.xaml) of an control (e.g. TextBox of wndPers.xaml) including at least one reference (e.g. "address", "name", "type" of "pers" in wndPers.xaml a SQL table via Pers.dsd), data source, e.g. SQL table, is provided together with a design-time generic binding function (e.g. within public class xDataSet : DataSet) and the data source (e.g. SQL table "pers" via "xDataSet").

The modifiable binding configuration is loaded by the processor and processed by invoking the binding function is invoked to bind the data source object to the control which then might be displayed on a display or screen (as in fig. 1) and used to display and/or manipulate and/or enter data.

The runtime modifiable binding configuration might be changed and such changed runtime modifiable binding configuration might be processed by the processor invoking the binding function to bind the or another data source to the control as defined in the modified binding configuration. The Control with the new binding configuration might be displayed on a display or screen and used to display and/or manipulate and/or enter the data in a different way or other data as defined in the changed binding configuration.

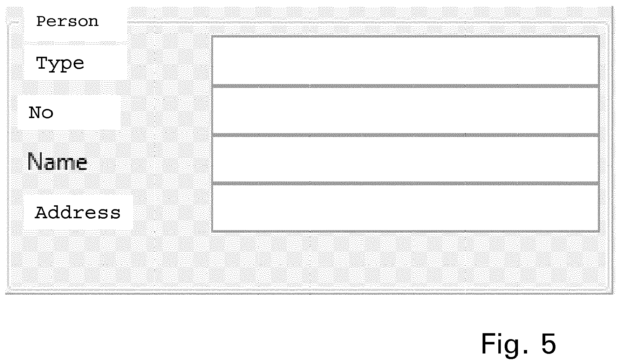

Both aspects might be combined, e.g. by including the runtime modifiable binding configuration in the runtime modifiable configuration of a graphical user interface (e.g. as in wndPers.xaml) and invoking the design-time generic loader function and the design-time generic binding function to display a window with a control that is bound as defined by the included runtime modifiable binding configuration (e.g. as in Fig. 5).

The method in accordance with the present application may use a design-time and/or a pre-runtime compiled Loader function to generate at least one runtime-modifiable component during runtime and to display the at least one runtime-modifiable component. A pre-runtime compiled loader is an engine, function and/or code, preferably a function and/or class that is designed and compiled prior to the runtime, especially prior to use of the memory, executing the method or system or the first code of the method, memory or system. It may preferably be understood that at least one runtime-modifiable component may comprise a plurality of different runtime-modifiable components. This means the runtime-modifiable components are different from each other and might be defined in different co-existing runtime-modifiable configurations or by only one runtime-modifiable configuration amended during runtime. The plurality of runtime-modifiable components are preferably generated and displayed at different times. They might be configured to handle different task and/or to display different information and/or information in different ways.

According to the present disclosure, at least one user interface may be compiled and bound to a data structure. The at least one user interface is not compiled and bound to the data structure at a start of a program or earlier but is, instead compiled and bound to the data structure later, i.e., a period of time after the start of the program. In particular, the at least one user interface is compiled and bound to the data structure when a user interface is called. The timing allows for a very extensive modification at this level at runtime.

Additionally, the present disclosure introduces a binding engine that is different from previously known binding engines. The disclosed binding engine makes it possible to link references to binding elements with a data structure that is compiled at runtime ("dynamic data structure"). This allows a subsequent adaptation of the software at runtime (and without access to its source code) because the actually compiled program code is not affected. The binding engine of the present disclosure makes it possible, for example, to load at least one runtime-modifiable binding configuration regarding the binding of a data source of at least one control, wherein the binding configuration includes reference to at least one element to be bound and to bind the element to be bound by use of the design-time generic binding engine and/or code. In particular, data mapping or binding is supported by freely configurable Structured Query Language (SQL) statements, especially with dynamic arguments within the configuration and/or reference.

For this purpose, the disclosed binding engine, especially a design-time and/or pre-runtime compiled engine and/or function, and/or the binding method loads at least one runtime-modifiable binding configuration regarding the binding of a data source of at least one control that includes reference to at least one element to be bound; and binds the element to be bound by use of a design-time generic binding engine and/or code. The elements are dynamically exchangeable during runtime and are preferably structured data.

A method is optionally used for displaying and/or editing the data. The method makes use of a binding configuration that can be changed at runtime to display and/or enable editing the data. Preferably, the configuration includes not only the data source, but also the bound data fields to which the data of the data source is to be bound.

The present disclosure includes a method for displaying and/or editing data that uses a binding configuration which can be modified at runtime to display and/or edit the data and, in particular, reads from this binding configuration not only the data source but also the bound data fields to which the data of the data source is bound. The binding configuration is not necessarily stored in a single file but can also be distributed to several files and/or be stored in other structures.

Such a binding engine, such a procedure or method reads the data fields in which data is to be displayed and the data source from which the data is to be retrieved from one and/or the binding configuration that can be changed at runtime.

The present disclosure may utilize the concept of differential derivation. By such concept amendments are stored in modification files that contain the modification information. By the concept of differential derivation original program code and configuration are not changed, but the original configuration and modification files are merged at runtime. This makes it possible, for example, to provide common updates to the original program code without losing individual amendments.

Amendments to structured files, XML files, XAML files, program code and/or data bindings, especially dsd files, are stored in modification files and are merged with the original configuration at runtime. These modifications can be realized easily, especially with XML and XAML files, because they are structured data formats. But such modifications and the concept of differential derivation can also be used with regard to data binding, especially in dsd files, for example in the form of structured files. For example, SQL statements in a data binding can be stored in a structured way as shown further down in Pers.dsd or for example as follows:

```
       < ?xml version = "1.0" encoding = "utf-8"? >
       < DSQL>
        < Tables >
         <Table TblName = "bel" >
           < XSQL Comment = "" IsDesignMode = "True" >
            <Arguments />
            <Tables>
              < Table Name = "bel" X = "60" Y = "20" Width = "180"
      Height = "240" SortFieldsAlphabetically = "false"
      HideUnusedFields = "false" />
            < /Tables>
            < Fields >
              < Field TableName = "bel" Name = "type" Caption = "Type" />
              < Field TableName = "bel" Name = "no" Caption = "Number" />
              < Field TableName = "bel" Name = "date" Caption = "Date" />
              < Field TableName = "bel" Name = "pers_type" Caption = "Person-
      Type" />
              < Field TableName = "bel" Name = "pers_no" Caption = "Person-
      Number" />
              < Field TableName = "bel" Name = "status" Caption = "Status" />
              < Field TableName = "bel" Name = "printstatus"
      Caption = "Printstatus" />
            < /Fields >
            <ComputedFields />
            < Expressions / >
            < Joins />
            <WhereClause />
            <GroupByClause />
            < OrderByClause / >
            < Statement > SELECT "bel". "type",
      "bel"."no",
      "bel"."date",
      "bel"."pers_type",
      "bel"."pers_no",
      "bel"."status",
      "bel"."printstatus"
      FROM "bel"
       < /Statement >
           < /XSQL >
         < /Table >
        < /Tables >
       < /DSQL >
```

With regard to program code, amendments might be stored in modification files that contain the modification information and are merged at runtime with the original configuration or an original program code, for example, by object-oriented derivations of functions of the original configuration or an original program code.

In order to use the object-oriented derivations for storing amendments in modification files, the functions of the original program code or the original configuration are programmed as virtual functions in particular or bound late (late binding).

The reference of a change file to the original configuration can, for example, be stored in the change file using a unique ID, for example, a file containing the original configuration, usually a generated hash value. The unique ID can be used to detect if the original configuration has changed. For example, the unique ID can be used to detect if the original configuration changed because of an update. In other instance, the unique ID can aid in determining which version of the original configuration the change file originally belongs to.

For example, a method of generating or executing computer software in accordance with the present disclosure comprises implementing at least one graphical user interface in such a way that the graphical user interface is displayed dynamically at runtime based on a configuration of the graphical user interface that can be modified at runtime. This can be done, for example, in such a way that the configuration of the graphical user interface includes a graphical user interface design and/or configuration that contains at least one uncompiled file, a text file and/or an XAML file. Interface design is the design of a user interface, e.g. a window and/or control and might include the information of which elements, e.g. controls are to be place where in which size and color.

An example of a XAML file that is uncompiled and describes the window shown in Fig. 5 is referred to as wndPers.xaml in the following and may look like this and is referred to later by wndPers.xaml:

```
 < Grid xmlns = "http://schemas.microsoft.com/winfx/2006/xaml/presentation"
    xmlns:x= "http://schemas.microsoft.com/winfx/2006/xaml" >
   < GroupBox Header = "Person" DataContext = "{Binding Path = pers}" >
      < Grid >
         < Grid.RowDefinitions >
            < RowDefinition Height = "25" />
            < RowDefinition Height = "25" />
            < RowDefinition Height = "25" />
            < RowDefinition Height = "25" />
            < RowDefinition Height = "25" />
         < /Grid.RowDefinitions >
         < Grid.ColumnDefinitions >
            < ColumnDefinition Width = "100" / >
            < ColumnDefinition Width = "200" />
         < /Grid.ColumnDefinitions >
         < Label Grid.Row = "0" Grid.Column = "0" Content = "Type" />
         < TextBox Grid.Row = "0" Grid.Column = "1" Text = "{Binding
         Path = type}" />
         < Label Grid.Row = "1" Grid.Column = "0" Content = "No" />
         < TextBox Grid.Row = "1" Grid.Column = "1" Text = "{Binding
         Path = no}" />
         < Label Grid.Row = "2" Grid.Column = "0" Content = "Name" />
         < TextBox Grid.Row = "2" Grid.Column = "1" Text = "{Binding
         Path = name}" />
         < Label Grid.Row = "3" Grid.Column = "0" Content = "Address" />
         < TextBox Grid.Row = "3" Grid.Column = "1" Text = "{Binding
         Path = address}" />
      < /Grid >
   < /GroupBox >
 < /Grid >
```

This configuration also includes runtime-modifiable binding configuration, providing references from data fields (TextBoxes as controls) to be bound to (columns of) a DataTable used as data source of the controls. E.g. the "TextBox Grid.Row = "3"" includes a reference "Text = "{Binding Path = address}"" to the column "address" within the DataTable referenced as "DataContext = "{Binding Path = pers}"". This DataTable object might be defined as an XDataSet via var dataSet = new xDataSet("Pers") (as defined in detail further down and a file called Pers.dsd which consist of a second part of a binding configuration with the following content:

```
 < ?xml version = "1.0" encoding = "utf-8"?>
 < TLXMLDefinition >
  < DataSet Descr = "" Type = "10" >
   < Args >
    < Argument Id = "typ" DataType = "10" />
    <Argument Id = "nr" DataType = "10" />
   < /Args >
   < Relations / >
   <Tables>
    < Table TblName = "pers" UpdateMode = "10" MasterTable = "1 "
    Comment = " " >
      < Statement > SELECT "pers". "type",
 "pers". "nr",
 "pers"."name"
 "pers "."address"
 FROM "pers"
 WHERE (pers.type = :type) AND
 (pers.nr = :nr)
 < /Statement >
    </Table>
   < /Tables>
  < /DataSet >
 < /TLXMLDefinition >
```

This DataSource Object includes dynamic arguments as ":type" and ":nr". In General the binding configuration, especially a second part of the binding configuration might include and/or support as dynamic arguments variables and/or placeholders which might be filled, used, populated by and/or assigned a value and/or object during runtime and/or within a first part of the binding configuration. The first part of the binding configuration might assign a fixed value and/or object and/or might assign another variable and/or placeholder that again might be filled, used, populated by and/or assigned a value and/or object during runtime.

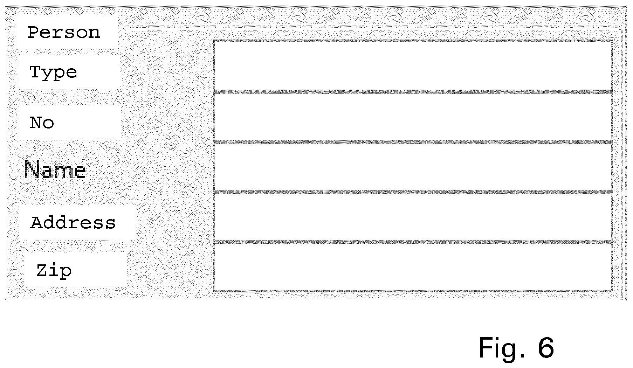

The window of Fig. 5 can be extended at runtime by a simple amendment and can code the window of Fig. 6. An extension of the window of Fig. 5 is shown below and is referred to later by wndPers2.xaml:

```
 < Grid xmlns = "http://schemas.microsoft.com/winfx/2006/xaml/presentation"
    xmlns:x = "http://schemas.microsoft.com/winfx/2006/xaml" >
   < GroupBox Header = "Person" DataContext = "{Binding Path = pers}" >
      < Grid >
         < Grid.RowDefinitions >
            < RowDefinition Height = "25" />
            < RowDefinition Height = "25" />
            < RowDefinition Height = "25" />
            < RowDefinition Height = "25" />
            < RowDefinition Height = "25" />
         < /Grid.RowDefinitions >
         < Grid.ColumnDefinitions >
            < ColumnDefinition Width = "100" / >
            < ColumnDefinition Width = "200" />
         < /Grid.ColumnDefinitions >
         < Label Grid.Row = "0" Grid.Column = "0" Content = "Type" />
         < TextBox Grid.Row = "0" Grid.Column = "1 " Text = "{Binding
         Path = type}" />
         < Label Grid.Row = "1" Grid.Column = "0" Content = "No" />
         < TextBox Grid.Row = "1" Grid.Column = "1" Text = "{Binding
         Path = no}" />
         < Label Grid.Row = "2" Grid.Column = "0" Content = "Name" />
         < TextBox Grid.Row = "2" Grid.Column = "1" Text = "{Binding
         Path = name}" />
         < Label Grid.Row = "3" Grid.Column = "0" Content = "Address" />
         < TextBox Grid.Row = "3" Grid.Column = "1" Text = "{Binding
         Path = address}" />
         < Label Grid.Row = "4" Grid.Column = "0" Content = "ZIP" />
         < TextBox Grid.Row= "4" Grid.Column = "1" Text = "{Binding
         Path=zip}" />
      < /Grid >
   < /GroupBox >
 < /Grid >
```

By using a "Customizing Runtime" function (hereinafter referred to as "CR"), the compiled CR code does not need to be changed. The CR is based on a "Loader" function, especially a pre-runtime compiled "Loader" function that is independent of the configuration and/or the content of the configuration. If the configuration is changed the Loader might reload the configuration to display the modified window. Only the functional logic and a generic connection (Loader) for the runtime-modifiable configuration and the functional logic are used in a pre-runtime compiled form; i.e., only the functional logic and a generic connection (Loader) that is independent of the configuration and/or its content are compiled prior to running the program or executing the method or prior to runtime.

A simple Loader in .Net might look like:

```
 private void LoadContent(object dataContext, string path)
 {
      var content = XamIReader.Load(File.OpenRead(path)) as
      FrameworkElement;
      contentElement.Content = content;
      contentElement.DataContext = dataContext;
      }
```

The runtime modifiable configuration is provided by "path" as string of the location where the runtime modifiable configuration is saved.

To enable the Loader to load and the system or method to display the runtime modifiable component one might amend the standard WPF XAML code as follows

```
< Window x:Class = "WpfApplication1.MainWindow"
      xmlns = "http://schemas.microsoft.com/winfx/2006/xaml/presentation"
      xmlns:x= "http://schemas.microsoft.com/winfx/2006/xaml"
      Title = "MainWindow" Height = "350" Width = "525" >
   < ContentElement x:Name = "contentElement" >
   < /ContentElement >
 </Window>
```

Which creates a container into which the runtime modifiable configuration will be loaded by the Loader.

For example, a generic loader can be realized by including and compiling a generic element and/or container as shown above and (re)loading of the runtime-modifiable configuration by a loader function, code, engine, class and/or constructor into such container and/or element.

The above Loader includes as well the invoking of a generic binding engine by "contentElement.DataContext = dataContext;" As dataContext a xDataSet might be passed on as in the following example:

```
 private void LoadDynamicDataSet()
 {
           var dataSet = new xDataSet("Pers");
           dataSet.Args["typ"] = 1;
           dataSet.Args["nr"] = 12345;
           dataSet.Retrieve();
           LoadContent(dataSet, "wndPers.xaml");
           }
```

The "Pers" argument of the XDataSet constructor refers to the pers.dsd providing runtime modifiable binding configuration for the XDataSet.

As in the example, in general, a generic binding engine or code can be realized by generating, invoking and/or using a, preferably compiled and/or design-time, generic binding object, such as a generic container and/or generic class (e.g. as public class xDataSet : DataSet as defined in this application in the context of .net Framework).

The method might include generating, invoking and/or using a, preferably compiled and/or design-time, generic binding object, such as a generic container and/or generic class (e.g. as public class xDataSet : DataSet as defined in this application in the context of .net Framework).

Into the generic container preferably the at least one content, element, data of the data source and/or data can be and/or is loaded and/or such is included in the method, e.g. by a generic binding function of the generic binding engine or code, e.g., as in the example, by a constructor of the generic binding object, class and/or container. The method and/or system preferably includes using the generic binding object as DataSource of the control, preferably by binding the generic binding object to the DataSource, preferably as in and/or in the .net Framework, e.g. by the BindingSource in .net framework. The generic binding object and/or the method preferably includes and/or includes functionality to and/or is arranged to mirror amendments of data in the object to the data source and/or mirror amendments of the data in the data source to the data in the object. The control and/or the method preferably includes and/or includes functionality to and/or is arranged to mirror amendments of data in the object to the control and/or mirror amendments of the data in the control to the data in the object, e.g. as provided by the .net binding class and/or included e.g. in the .net DataSet class.

The generic binding function and/or the method preferably includes and/or includes functionality to and/or is arranged to load data from the data source and to store it in the generic binding object.

In general a generic window might be used to triggers the (re)loading of the runtime-modifiable configuration and/or runtime-modifiable binding configuration. (Re)loading is preferably done, as shown above, by means of a generically and pre-runtime compiled code (also known as CR (Customizing Runtime). The display is done, for example - but not necessarily - by a generic window, especially an empty window. This can be done, for example, by a generic and compiled xaml file as a generic window. The window can display the reloaded object and/or initiate reloading. A generic window can be displayed in wpf as follows, referred to by generic_window.xaml or as shown above with the included container < ContentElement x:Name = "contentElement" >

```
 < /ContentElement > :
 < Window x:Class = "TimeLine.Patent.MainWindow"
      xmlns = "http://schemas.microsoft.com/winfx/2006/xaml/presentation"
      xmlns:x = "http://schemas.microsoft.com/winfx/2006/xaml"
      Title = "MainWindow" Height = "350" Width = "525" >
   < Grid >
      < Grid.ColumnDefinitions >
         < ColumnDefinition Width = "Auto" />
         < ColumnDefinition Width = "*" />
      < /Grid.ColumnDefinitions >
      < StackPanel Grid.Column = "0" x:Name = "menuStackPanel" />
      < ContentControl Grid.Column = "1" x:Name = "contentControl" />
   < /Grid >
 </Window>
```

The configuration of the graphical user interface, which can be modified at runtime, can then be loaded at runtime by a corresponding loader. This can be realized as follows:
A corresponding link and/or configuration is created, for example as follows via the modules.xml:

   ```
 < modules>
   < module id = "wndPers" title = "Person" xaml = "wndPers.xaml"
   dll = "TimeLine.Patent.exe" class = "TimeLine.Patent.Modules.wndPers" />
   < module id = "wndPers2" title = "Person" xaml = "wndPers2.xaml"
   dll = "TimeLine.Patent.exe" class = "TimeLine.Patent.Modules.wndPers2" />
 < /modules >
```

This example refers to the code above, e.g. wndPers.xaml.

Loading of the corresponding configuration, e.g. a window and/or a module at runtime can be initiated in a number of ways. For instance, the loading can be initiated by clicking on a corresponding button which is generated when the program is started in the generic window and linked to a corresponding routine and/or by any event configured.

In a main routine, the different modules and/or windows might be initialized as follows:

```
 public MainWindow() {
         InitializeComponent();
        foreach (var module in ModuleLoader.GetModules()) {
           var button = new Button {
                        Content = module.Title
                     };
           button.Click + = (sender, args) = >
                       {
                          contentControl.Content =
                          ModuleLoader.OpenModule(module);
                       };
           menuStackPanel.Children.Add(button);
         }
      }
```

The reloading itself can take place independently of its triggering by suitable compiled and/or generic methods. For example, the main routine mentioned above already referred to this following code:

```
 public class Module
   {
      public string Id { get; set; }
      public string Title { get; set; }
      public string Xaml { get; set; }
      public string Dll { get; set; }
      public string Class { get; set; }
   }
   public static IEnumerable< Module> GetModules()
      {var document = XDocument.Load(@"Config\modules.xml");
        foreach (var moduleElement in document.Root.Elements())
         {yield return new Module
                     {
                        Id = moduleElement.Attribute("id").Value,
                        Title = moduleElement.Attribute("title").Value,
                        Xaml = moduleElement.Attribute("xaml").Value,
                        Dll = moduleElement.Attribute("dll").Value,
                        Class = moduleElement.Attribute("class").Value,
                     };
         }
      }
      public static FrameworkElement OpenModule(Module module) {
        var xamlPath = Path.Combine("Modules", module.Xaml);
        var assembly = Assembly.LoadFile(Path.GetFullPath(module.Dll));
        var who = assembly.Createlnstance(module.Class) as
        WindowHandlingObject;
        var content = XamlReader.Load(File.OpenRead(xamlPath)) as
        FrameworkElement;
         who.WindowContent = content;
         who.Opened();
         return content;
      }
   }
```

Such a configuration and/or implementation can be used to implement the present invention.

The inventive binding engine, which enables references that link elements to a data source which are computed and/or executed and/or bound at runtime ("dynamic data binding or structure"), can be implemented as follows:
A second part of a binding configuration, together with the first part of the binding configuration which is just a reference to the second part can be used as binding configuration. E.g. it can be used to bind a database table to the windows described above. Such second part of a binding configuration might be implemented as the above pers.dsd or a simplified pers'.dsd as follows:

   ```
 < DataSetDefinition >
       < Tables >
             < Table Name = "pers" >
         SELECT
        type,
         no,
         name,
         address
        FROM pers</Table>
       < /Tables >
 < /DataSetDefinition >
```

This simplified definition as well as the above pers.dsd can be extended at runtime to suit the example above e.g. as follows:

```
 < DataSetDefinition >
       < Tables >
             < Table Name = "pers" >
         SELECT
        type,
         no,
         name,
         address,
        zip
         FROM pers</Table>
       < /Tables >
 < /DataSetDefinition >
```

The connection can be made using a design-time generic binding engine, e.g. in form of a generic binding functions, class and/or code such as the following: public class xDataSet : DataSet

```
   { private readonly Dictionary < string, string > sqlDictionary = new
   Dictionary < string, string > ();
      public xDataSet(string dataSetld)
      {
        var document = XDocument.Load(Path.Combine("DataSets", dataSetld
 + ".dsd"));
        var tableElements = document.Root.Element("Tables").Elements();
        foreach (var tableElement in tableElements)
         {var tableName = tableElement.Attribute("Name").Value;
           var sql = tableElement.Value;
           sqlDictionary[tableName] = sql;
         }
      }
      public void Retrieve()
      {foreach (var table in this.Tables.Cast < DataTable > ().ToArray())
         {
           this.Tables.Remove(table);
         }
         using (var connection = new SQLiteConnection("Data
         Source = test.db;"))
         {connection.Open();
           foreach (var sqlPair in sqlDictionary)
           {
              var tableName = sqlPair.Key;
              var sql = sqlPair.Value;
              var adapter = new SQLiteDataAdapter(sql, connection);
              adapter.Fill(this, tableName);
           }
         }
      }
   }
```

Which might be used by the above LoadDynamicDataSet() or

```
 private void LoadDynamicDataSet()
 {var dataSet = new xDataSet("pers");
      dataSet.Args["typ"] = 1;
      dataSet.Args["nr"] = 12345;
      dataSet. Retrieve();
      LoadContent(dataSet) ;
      }
```

or might be used with a Window Handling Object for a window, here the window wndPers (as defined above by module id = wndPers and wndPers.xaml) :

```
public class wndPers : WindowHandlingObject
   {
      public override void Opened()
      {
         base.Opened();
        var dataSet = new xDataSet("pers");
        dataSet. Retrieve();
        WindowContent.DataContext = dataSet;
      }
   }
```

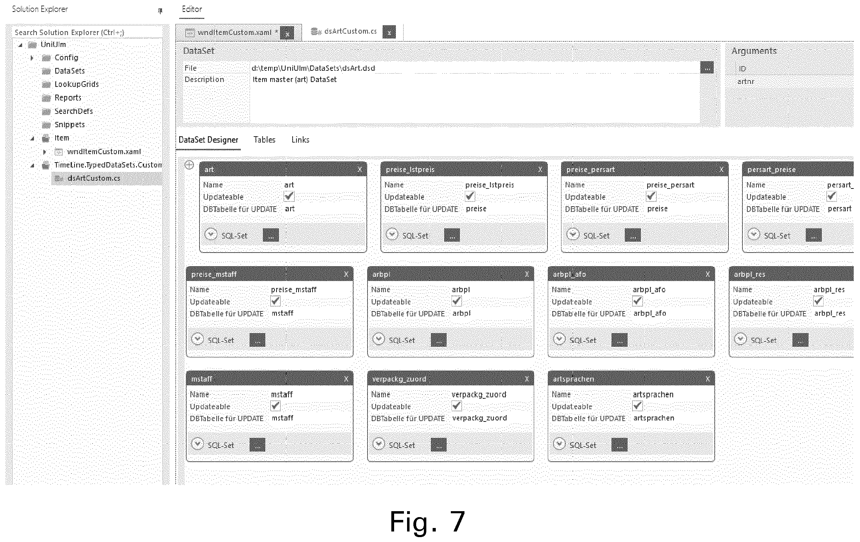

By this, the data connection is flexible and both, binding dynamic elements to dynamically changing data structures modifiable at runtime, and working in the pre-runtime compiled source code with typed data structures (compiled "type-safe" and preferably generated by code generator) can be achieved.
The method of using the Binding Engine in accordance with the present disclosure is described hereafter. In a first step and as illustrated in Fig. 7, the programmer starts with the datamodel which he designs preferably - but not necessarily - in a graphical designer. The .dsd-file is an xml-file that represents the data-structure of the business object and is the second part of the binding configuration. Here is the first main difference to standard .net which actually compiles the data structure into the source code (e.g. "entity"-framework).

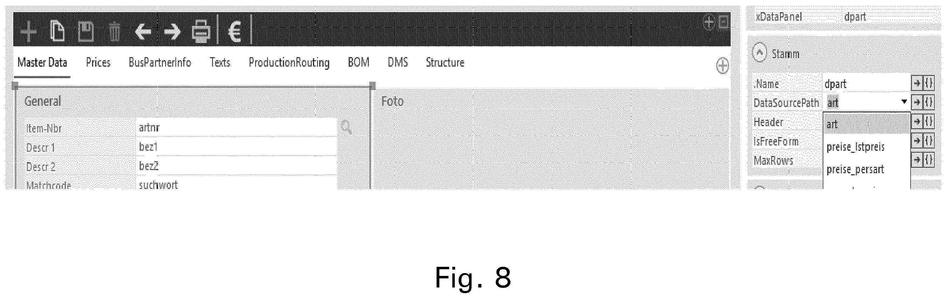

A second step involves dynamic binding according to a reference to an element defined in "DataSourcePath" named DataContext = "{Binding Path = XX}, e.g. DataContext = "{Binding Path = Pers}, in the configuration above which provides the first part of the binding configuration. Fig. 8 shows the design and configuration of the component and/or container (which is also referred to herein as the "datapanel" and defined above as window, eg. wndPers or wndPers2 in form a runtime-modifiable configuration) that carries the reference to the table in the data source and/or to the second part of the binding configuration in a specific parameter (which is referred to herein as "DataSourcePath"). This creates a link between the container (i.e., the "datapanel") and the data table via the second part of the binding configuration. The link and/or reference is used during runtime by the design time generic binding engine, e.g. as listed above as public class xDataSet : DataSet .

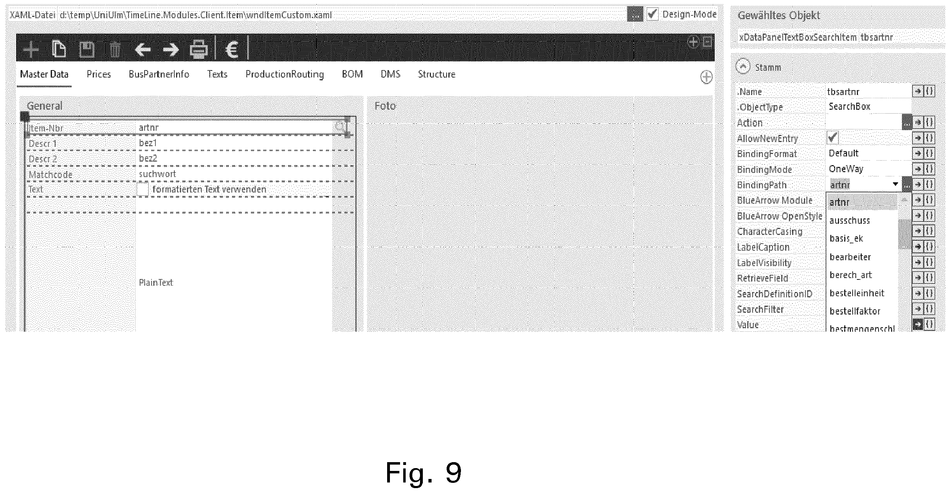

Fig. 9 shows that in the design and configuration the controls inside the container and/or datapanel in turn are mapped to fields within that table that was referenced by the DataSourcePath of the container. That parameter is also referred to herein as the "BindingPath".

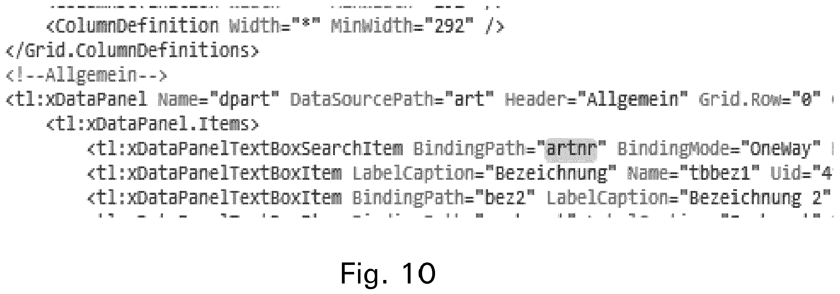

The definition of the input-screen is also an XML-file and is shown in Fig. 10 and as listed above as wndPers.xaml for the wndPers window.

The XAML-snippet shown in Fig. 10 contains a simplified binding-syntax; whereas the principal technology used in the present disclosure is the same as .net.

However, the big difference between the approach in accordance with the present disclosure and the PRIOR ART standard .net is that in the present method the XML-form of the XAML is used and is loaded and used at runtime to construct the interface. In the PRIOR ART standard .net compiles the XAML into source code which makes it impossible to customize interfaces without inheriting/coding/recompiling.

Moreover, "binding" is usually done with a lot of coding (i.e. source code) whereas the binding by the generic binding engine generically activates binding by solely using the described binding-properties and/or configuration in the binding configuration.

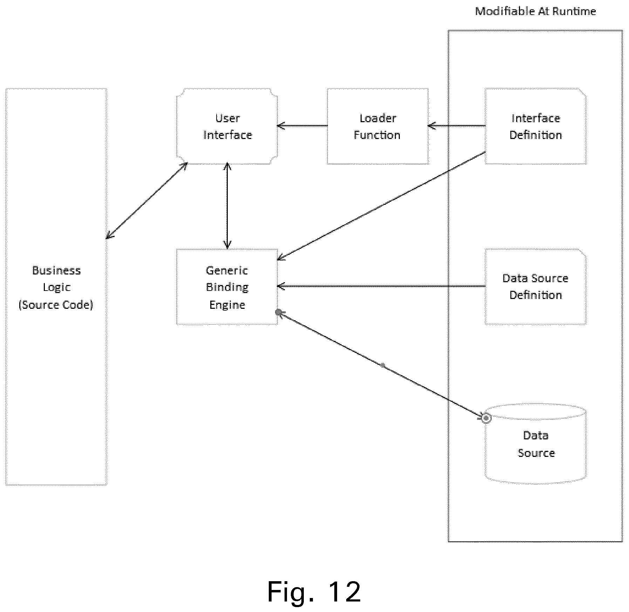

Fig. 12 shows a chart illustrating the separation of specific source code ("business logic") on one side (which is not necessary but increases the functionality) and component and/or interface- and binding and/or data source-definitions on the other side whereas the latter are stored in a way that they can be modified at runtime (post-compile) and the former are compiled prior to runtime, especially at design-time.

The generic loader function loads the component and/or interface definition to generate the component as user-interface whereas the generic binding engine uses the interface definition including a first part of the binding configuration and the data source definition including a second part of the binding configuration to facilitate two-way-binding during runtime. Preferably the first part of the binding configuration is (only) a reference to the second part of the binding configuration.

By combining the windows that can be modified at runtime and the flexible data connection modifiable at runtime, an unknown flexibility at runtime is achieved, since both, data binding and data display and/or user interfaces are fully modifiable to at runtime.

The task is also solved by computer software for generating, executing and/or displaying at least one graphical user interface, whereby the graphical user interface is dynamically displayed at runtime based on a runtime-modifiable configuration of the graphical user interface on a display.

The task is also solved by a data carrier comprising a computer software according to the present disclosure, a binding engine and/or a computer software set up to carry out an inventive procedure.

The task is also solved by means of a data processing device, comprising an inventive computer software, a binding engine and/or computer software set up to carry out an inventive process and/or a data processing device set up to carry out an inventive process.

With regard to the system, all advantageous versions described for the method can be implemented accordingly as advantageous systems. With regard to the method, all advantageous versions described for the system can be implemented accordingly as advantageous method.

The performance of the method according to the present disclosure for generating at least one runtime-modifiable component within a computer system may providing a computer system including hardware and software; generating at least one runtime-modifiable component during runtime with a processor of the computer system; and displaying the at least one runtime-modifiable component on a display of the computer system; wherein the at least one runtime-modifiable component corresponds to a runtime-modifiable configuration of the graphical user interface.

The method may further comprise including an interface design of the graphical user interface as the runtime-modifiable configuration of the graphical user interface.

The method may further comprise using at least one uncompiled file, a text file and/or an XAML file as the runtime-modifiable configuration of the graphical user interface.

The generating and displaying of the at least one graphical user interface at runtime is based on the runtime-modifiable configuration of the graphical user interface within a design-time and/or a pre-runtime compiled and/or bound window. The at least one runtime-modifiable component may comprise a plurality of different runtime-modifiable components; and the method may further comprise selecting a generic design-time and/or pre-runtime compiled and/or bound window; and arranging the generic design-time and/or pre-runtime compiled and/or bound window to display the plurality of different runtime-modifiable components at different times. The plurality of different runtime-modifiable components are graphical user interfaces that are generated during runtime and are displayed.

The method may further comprise using a design-time and/or a pre-runtime compiled Loader function to generate at least one runtime-modifiable component during runtime and to display the at least one runtime-modifiable component. The method may further comprise amending the at least one runtime-modifiable component during runtime by modifying the runtime-modifiable configuration of the graphical user interface; updating and/or reloading the at least one runtime-modifiable component based on the modified runtime-modifiable configuration of the graphical user interface.

The method may further comprise arranging the user interface to display, enable input and/or modification of data to and/or by a user which further includes at least one binding of a data of the data source to said user interface and/or component and/or control of said interface. The method may further comprise configuring the at least one runtime-modifiable component to access and/or display, enable input and/or modification of data from at least one source system within the hardware and software computer system to and/or by a user. The terms "data" and "one or more data" may preferably be understood as any data bit or plurality of data bit, e.g. providing information, e.g. data stored in one or more table or variable. A source system or a data source system may preferably be understood to be a system providing data, e.g. a database server and/or a database.

Each graphical user interface of the at least one runtime-modifiable component corresponds to one or more data from a source system within the hardware and software computer system.

The method may further comprise loading at least one runtime-modifiable binding configuration regarding the binding of a data source of at least one control wherein the runtime-modifiable binding configuration includes reference to at least one element to be bound; and binding the element to be bound by use of a design-time generic binding engine and/or design-time generic binding code. The at least one runtime-modifiable binding configuration is part of the runtime-modifiable configuration of the graphical user interface.

The method may further comprise configuring the design-time binding engine to process references to elements to be bound; wherein the references have dynamic arguments; and binding the element to be bound by use of the design-time generic binding engine and/or design-time generic binding using the dynamic arguments, especially within a constructor method.

The at least one runtime-modifiable component comprises a plurality of runtime-modifiable components and the method may further comprise generating the plurality of runtime-modifiable components as graphical user interfaces that correspond to a plurality of runtime-modifiable configurations of the graphical user interfaces.

The method may further include at least one reference to a runtime-modifiable configuration in at least one runtime-modifiable configuration; and inheriting the at least one reference into the at least one runtime-modifiable configuration. The at least one runtime-modifiable component comprises one and/or more event sources. One or more event sources may preferably be understood as any structure or code providing events like any object providing at least one event in the .NET Framework.

The method may further comprise receiving data from the one and/or more event sources, wherein the data indicates an occurrence of one and/or more events; and executing at least one further of a plurality of runtime-modifiable components based on the occurrence of the one and/or more events. (The occurrence of the one and/or more events may preferably be understood to refer to the one and/or more event being raised, e.g. as in the .Net Framework.)

The hardware and software of the computer system comprises one and/or more event sources; and the method further comprises receiving data from the one and/or more event sources indicating an occurrence of one and/or more events; and executing the at least one runtime-modifiable component based on the occurrence of the one and/or more events.

The system for performing the method in accordance with the present application includes a processing unit comprising one or more processors; a memory coupled with and readable by the processing unit; and a display; said memory storing therein a set of computer-readable instructions which, when executed by the processing unit, causes the processing unit to generate runtime-modifiable components within a hardware and software computer system; wherein the runtime-modifiable components are graphical user interfaces created by generating at least one runtime-modifiable component corresponding to at least one runtime-modifiable configuration of the graphical user interfaces and causes the computer system to display the runtime-modifiable components on the display. The at least one runtime-modifiable configuration includes an interface design of the graphical user interface. The at least one runtime-modifiable configuration of the graphical user interface is and/or includes at least one uncompiled file, a text file and/or an XAML file as the at least one runtime-modifiable configuration of the graphical user interface.

The system includes a design-time and/or a pre-runtime compiled and/or bound window and wherein the memory stores therein further computer-readable instructions which, when executed by the processing unit, causes the processing unit to generate and display the at least one graphical user interface at runtime based on the at least one runtime-modifiable configuration of the graphical user interface within said design-time and/or pre-runtime compiled and/or bound window. The at least one runtime-modifiable components comprises a plurality of different runtime-modifiable components; and the memory stores therein further computer-readable instructions which, when executed by the processing unit, causes the processing unit to select a generic design-time and/or pre-runtime compiled and/or bound window; and arrange the generic design-time and/or pre-runtime compiled and/or bound window to display the plurality of different runtime-modifiable components at different times. The plurality of different runtime-modifiable components are graphical user interfaces that are generated during runtime and are displayed.

The memory stores a design-time and/or a pre-runtime compiled Loader function to wherein the Loader function when executed by the processing unit, causes the processing unit to generate the at least one runtime-modifiable component during runtime and to display the at least one runtime-modifiable component. The memory stores therein further computer-readable instructions which, when executed by the processing unit, causes the processing unit to amend the at least one runtime-modifiable component during runtime by modifying at least one runtime-modifiable configuration of the graphical user interface and update and/or reload the at least one runtime-modifiable component based on the modified at least one runtime-modifiable configuration of the graphical user interface.

The system may further include a data source and wherein the memory storing at least one binding of the data source to a component and/or control and the memory stores therein further computer-readable instructions which, when executed by the processing unit, causes the processing unit to arrange the user interface to display, enable input and/or to enable modification of data of/in the data source to and/or by a user. Modification of data may preferably be understood as modification information.

The memory stores therein further computer-readable instructions which, when executed by the processing unit, causes the processing unit to configure the at least one runtime-modifiable component to access and/or display and/or enable input and/or modification of data from at least one source system within the hardware and software computer system to and/or by a user.

The system may further include a data source system wherein each graphical user interface of the at least one runtime-modifiable component corresponds to one or more data from a data source system within the hardware and software computer system.

The memory may further store therein at least one runtime-modifiable binding configuration and a design-time binding engine, wherein said binding engine, when executed by the processing unit, causes the processing unit to load at least one runtime-modifiable binding configuration regarding the binding of a data source of at least one control wherein the runtime-modifiable binding configuration includes reference to at least one element to be bound; and to bind the element to be bound by use of a design-time generic binding engine and/or design-time generic binding code. The at least one runtime-modifiable binding configuration is part of the at least one runtime-modifiable configuration of the graphical user interface. The references have dynamic arguments and wherein said binding engine, when executed by the processing unit, causes the processing unit to bind the element to be bound by use of the design-time generic binding engine and/or design-time generic binding using the dynamic arguments, especially within a constructor method.

The memory of the system may store therein a set of instructions which, when executed by the processing unit, causes the processing unit to generate a plurality of runtime-modifiable components as graphical user interfaces that correspond to a plurality of runtime-modifiable configurations of the graphical user interfaces. The at least one runtime-modifiable configuration includes at least one reference to a runtime-modifiable configuration and wherein the memory stores therein further computer-readable instructions which, when executed by the processing unit, causes the processing unit to inherit the at least one reference into the at least one runtime-modifiable configuration. The at least one runtime-modifiable component comprises one and/or more event sources.

The memory of the system stores therein further computer-readable instructions which, when executed by the processing unit, causes the processing unit to receive data from the one and/or more event sources, wherein the data indicates an occurrence of one and/or more events; and execute at least one further of a plurality of runtime-modifiable components based on the occurrence of the one and/or more events.

The system comprises one and/or more event sources; wherein the memory stores therein further computer-readable instructions which, when executed by the processing unit, causes the processing unit to receive data from the one and/or more event sources indicating an occurrence of one and/or more events; and execute the at least one runtime-modifiable component based on the occurrence of the one and/or more events.

The present disclosure also provides a computer-readable memory comprising a memory of a hardware and software computer system; and a set of computer-readable instructions stored in the memory, which when executed by a processor of the hardware and software computer system, causes the processor to generate runtime-modifiable components within the hardware and software computer system; and the runtime-modifiable components are graphical user interfaces generated by the at least one runtime-modifiable component corresponding to at least one runtime-modifiable configuration of the graphical user interfaces. Further computer-readable instructions may be stored in the memory and these further instructions, when executed by the processor, causes the processor to generate at least one runtime-modifiable component during runtime with a processor of the hardware and software computer system and display the at least one runtime-modifiable component on the display of the hardware and software computer system; wherein the at least one runtime-modifiable component corresponds to a runtime-modifiable configuration of the graphical user interface. The further computer-readable instructions, when executed by the processor, causes the processor to include an interface design of the graphical user interface as the runtime-modifiable configuration of the graphical user interface. The further computer-readable instructions, when executed by the processor, causes the uncompiled file, a text file and/or an XAML file as the runtime-modifiable configuration of the graphical user interface. The generating and displaying of the graphical user interface at runtime is based on the runtime-modifiable configuration of the graphical user interface within a design-time and/or a pre-runtime compiled and/or bound window.

The further computer-readable instructions, when executed by the processor, causes the processor to select a generic design-time and/or pre-runtime compiled and/or bound window; and arrange the generic design-time and/or pre-runtime compiled and/or bound window to display a plurality of different runtime-modifiable components at different times. The plurality of different runtime-modifiable components are graphical user interfaces that are generated during runtime and are displayed.

The further computer-readable instructions, when executed by the processor, causes the processor to use a design-time and/or a pre-runtime compiled Loader function to generate the at least one runtime-modifiable component during runtime and to display the at least one runtime-modifiable component. The further computer-readable instructions, when executed by the processor, causes the processor to amend the at least one runtime-modifiable component during runtime by modifying the runtime-modifiable configuration of the graphical user interface; and update and/or reload the at least one runtime-modifiable component based on the modified runtime-modifiable configuration of the graphical user interface.

The further computer-readable instructions, when executed by the processor, causes the processor to arrange the graphical user interface to display, enable input and/or modification of data of a data source to and/or by a user which further includes at least one binding of the data of the data source to said user interface and/or components and/or controls of the user interface. The further computer-readable instructions, when executed by the processor, causes the processor to configure the at least one runtime-modifiable component to access and/or display, enable input and/or modification of data from at least one source system within the hardware and software computer system to and/or by a user. Each graphical user interface of the at least one runtime-modifiable component corresponds to one or more data from a source system within the hardware and software computer system.

The further computer-readable instructions, when executed by the processor, causes the processor to load at least one runtime-modifiable binding configuration regarding the binding of a data source of at least one control wherein the runtime-modifiable binding configuration includes reference to at least one element to be bound; and to bind the element to be bound by use of a design-time generic binding engine and/or design-time generic binding code. The at least one runtime-modifiable binding configuration is part of the runtime-modifiable configuration of the graphical user interface.

The further computer-readable instructions, when executed by the processor, causes the processor to configure the design-time binding engine to process references to elements to be bound; wherein the references have dynamic arguments; and bind the element to be bound by use of the design-time generic binding engine and/or design-time generic binding using the dynamic arguments, especially within a constructor method. The further computer-readable instructions, when executed by the processor, causes the processor to generate a plurality of runtime-modifiable components as graphical user interfaces that correspond to a plurality of runtime-modifiable configurations of the graphical user interfaces.

The further computer-readable instructions, when executed by the processor, causes the processor to include at least one reference to a runtime-modifiable configuration in the at least one runtime-modifiable configuration; and inherit the at least one reference into the at least one runtime-modifiable configuration. The at least one runtime-modifiable component comprises one and/or more event sources.

The computer-readable memory includes further computer-readable instructions, when executed by the processor, causes the processor to receive data from the one and/or more event sources, wherein the data indicates an occurrence of one and/or more events; and execute at least one further of a plurality of runtime-modifiable components based on the occurrence of the one and/or more events. The hardware and software of the computer system comprises one and/or more event sources; and the computer-readable memory comprises further computer-readable instructions which, when executed by the processor, causes the processor to receive data from the one and/or more event sources indicating an occurrence of one and/or more events; and execute the at least one runtime-modifiable component based on the occurrence of the one and/or more events.

The present disclosure also provides a method for binding within a hardware and software computer system, the method comprising loading with a processor of a hardware and software computer system at least one runtime-modifiable binding configuration regarding the binding of a data source of at least one control wherein the runtime-modifiable binding configuration includes reference to at least one element to be bound; and binding the element to be bound by use of a design-time generic binding engine and/or design-time generic binding code with a processor of a hardware and software computer system. The at least one runtime-modifiable binding configuration is part of a runtime-modifiable configuration of a graphical user interface. The method further comprises configuring the binding engine to process references to elements to be bound, wherein the references have dynamic arguments; and binding the element to be bound by use of the design-time generic binding engine and/or design-time generic binding using the dynamic arguments, especially within a constructor method.

In accordance with an aspect of the present disclosure there is provided a system comprising a processing unit comprising one or more processors; memory coupled with and readable by the processing unit and storing therein a set of instructions; and a design-time binding engine; wherein the set of instructions, when executed by the processing unit, causes the processing unit to generate runtime-modifiable components within a hardware and software computer system by searching through at least one runtime-modifiable binding configuration that is modifiable at runtime for references to elements to be bound and binds the elements to be bound with a data source using the design-time binding engine. The at least one runtime-modifiable binding configuration is part of a runtime-modifiable configuration of a graphical user interface. The binding engine is configured to process references to elements to be bound, wherein the references have dynamic arguments, and binding the element to be bound by use of the design-time generic binding engine and/or design-time generic binding using the dynamic arguments, especially within a constructor method.

In accordance with another aspect of the present disclosure there is provided a computer-readable memory comprising a memory of a hardware and software computer system; a set of instructions stored by the memory which, when executed by a processor of the hardware and software computer system, causes the processor to generate runtime-modifiable components within the hardware and software computer system by searching through at least one runtime-modifiable binding configuration that is modified at runtime for references to elements to be bound and binding the element to be bound by use of the design-time generic binding engine and/or design-time generic binding using the dynamic arguments, especially within a constructor method. The at least one runtime-modifiable binding configuration is part of a runtime-modifiable configuration of a graphical user interface. The binding engine is configured to process references to elements to be bound, wherein the references have dynamic arguments, and to bind the element to be bound by use of the design-time generic binding engine and/or design-time generic binding using the dynamic arguments, especially within a constructor method.

Also, various inventive concepts may be embodied as one or more methods, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

The above-described embodiments can be implemented in any of numerous ways. For example, embodiments of technology disclosed herein may be implemented using hardware, software, or a combination thereof. When implemented in software, the software code and/or computer-readable instructions can be executed on any suitable processor or collection of processors, whether provided in a single computer or distributed among multiple computers. Furthermore, the instructions or software code can be stored in at least one non-transitory computer-readable storage medium, i.e., a computer-readable memory.

Also, a computer or smartphone utilized to execute the software code or computer-readable instructions via its processors may have one or more input and output devices. These devices can be used, among other things, to present a user interface. Examples of output devices that can be used to provide a user interface include printers or display screens for visual presentation of output and speakers or other sound generating devices for audible presentation of output. Examples of input devices that can be used for a user interface include keyboards, and pointing devices, such as mice, touch pads, and digitizing tablets. As another example, a computer may receive input information through speech recognition or in other audible format.

Such computers or smartphones may be interconnected by one or more networks in any suitable form, including a local area network or a wide area network, such as an enterprise network, and intelligent network (IN) or the Internet. Such networks may be based on any suitable technology and may operate according to any suitable protocol and may include wireless networks, wired networks or fiber optic networks.

The various methods or processes outlined herein may be coded as software/instructions that is executable on one or more processors that employ any one of a variety of operating systems or platforms. Additionally, such software may be written using any of a number of suitable programming languages or programming or scripting tools, and also may be compiled as executable machine language code or intermediate code that is executed on a framework or virtual machine.

In this respect, various inventive concepts may be embodied as a computer-readable storage medium, i.e., a computer-readable memory (or multiple computer-readable storage media) (e.g., a computer memory, one or more floppy discs, compact discs, optical discs, magnetic tapes, flash memories, USB flash drives, SD cards, circuit configurations in Field Programmable Gate Arrays or other semiconductor devices, or other non-transitory medium or tangible computer storage medium) encoded with one or more programs that, when executed on one or more computers or other processors, perform methods that implement the various embodiments of the disclosure discussed above. The computer-readable medium or media can be transportable, such that the program or programs stored thereon can be loaded onto one or more different computers or other processors to implement various aspects of the present disclosure as discussed above.

Terms such as "program" or "software" or "instructions" are used herein in a generic sense to refer to any type of computer code or set of computer-executable instructions that can be employed to program a computer or other processor to implement various aspects of embodiments as discussed above. Additionally, it should be appreciated that according to one aspect, one or more computer programs that when executed perform methods of the present disclosure need not reside on a single computer or processor, but may be distributed in a modular fashion amongst a number of different computers or processors to implement various aspects of the present disclosure. Computer-executable instructions may be in many forms, such as program modules, executed by one or more computers or other devices. Generally, program modules include routines, programs, objects, components, data structures, etc. that perform particular tasks or implement particular abstract data types. Typically the functionality of the program modules may be combined or distributed as desired in various embodiments.

Also, data structures may be stored in computer-readable media in any suitable form. For simplicity of illustration, data structures may be shown to have fields that are related through location in the data structure. Such relationships may likewise be achieved by assigning storage for the fields with locations in a computer-readable medium that convey relationship between the fields. However, any suitable mechanism may be used to establish a relationship between information in fields of a data structure, including through the use of pointers, tags or other mechanisms that establish relationship between data elements.

## Claims

1. A method for binding, preferably within a hardware and software computer system, the method comprising:
Loading, preferably with a processor of a hardware and software computer system, at least one runtime-modifiable binding configuration including at least one link between a data source and at least one control; and
binding the data source by use of a, preferably design-time, generic binding engine or, preferably design-time, generic binding code, preferably with a processor of a hardware and software computer system, to the control.

2. The method according to claim 1, wherein the at least one runtime-modifiable binding configuration is at least partly part of a runtime-modifiable configuration of a graphical user interface and the method includes generating at least one runtime-modifiable component during runtime with a processor of the computer system; and
displaying the at least one runtime-modifiable component on a display of the computer system; wherein the at least one runtime-modifiable component corresponds to the runtime-modifiable configuration of the graphical user interface.

3. The method according to claim 1 or 2, further comprising:
configuring the binding engine to process references to elements to be bound, wherein the references have dynamic arguments; and
binding the element to be bound by use of the design-time generic binding engine or design-time generic binding using the dynamic arguments, especially within a constructor method.

4. A system comprising:
a processing unit comprising one or more processors;
memory coupled with and readable by the processing unit and storing therein a set of instructions; and
a design-time binding engine; wherein the set of instructions, when executed by the processing unit, causes the processing unit to generate runtime-modifiable components within a hardware and software computer system by searching through at least one runtime-modifiable binding configuration that is modifiable at runtime for references to elements to be bound and inserts the elements to be bound with a dynamically structured data source using the design-time binding engine.

5. The system according to claim 4 wherein the at least one runtime-modifiable binding configuration is at least partly part of a runtime-modifiable configuration of a graphical user interface and the set of computer-readable instructions, when executed by the processing unit, causes the processing unit to generate runtime-modifiable components within a hardware and software computer system; wherein the runtime-modifiable components are graphical user interfaces created by generating at least one runtime-modifiable component corresponding to the least one runtime-modifiable configuration of the graphical user interfaces and causes the computer system to display the runtime-modifiable components on the display.

6. The system according to claim 4 or 5, wherein the binding engine is configured to process references to elements to be bound, wherein the references have dynamic arguments, and binding the element to be bound by use of the design-time generic binding engine or design-time generic binding using the dynamic arguments, especially within a constructor method.

7. A method for generating at least one runtime-modifiable component within a computer system, said method comprising:
providing a computer system including hardware and software;
generating at least one runtime-modifiable component during runtime with a processor of the computer system; and
displaying the at least one runtime-modifiable component on a display of the computer system; wherein the at least one runtime-modifiable component corresponds to a runtime-modifiable configuration of the graphical user interface.

8. The method according to claim 7, further comprising:
including an interface design of the graphical user interface as the runtime-modifiable configuration of the graphical user interface.

9. The method according to claim 7 or 8, further comprising:
using at least one uncompiled file, a text file or an XAML file as the runtime-modifiable configuration of the graphical user interface.

10. The method according any of claims 7 to 9, wherein the generating and displaying of the at least one graphical user interface at runtime is based on the runtime-modifiable configuration of the graphical user interface within a design-time or a pre-runtime compiled or bound window.

11. The method according to any of claims 7 to 10, further comprising:
using a design-time or a pre-runtime compiled Loader function to generate at least one runtime-modifiable component during runtime and to display the at least one runtime-modifiable component.

12. The method according to any of claims 7 to 11, further comprising:
loading at least one runtime-modifiable binding configuration regarding the binding of a data source of at least one control wherein the runtime-modifiable binding configuration includes reference to at least one element to be bound; and binding the element to be bound by use of a design-time generic binding engine or design-time generic binding code.

13. A system comprising:
a processing unit comprising one or more processors; and
a memory coupled with and readable by the processing unit; and
a display;
said memory storing therein a set of computer-readable instructions which, when executed by the processing unit, causes the processing unit to generate runtime-modifiable components within a hardware and software computer system; wherein the runtime-modifiable components are graphical user interfaces created by generating at least one runtime-modifiable component corresponding to at least one runtime-modifiable configuration of the graphical user interfaces and causes the computer system to display the runtime-modifiable components on the display.

14. The system according to claim 13, wherein the at least one runtime-modifiable configuration includes an interface design of the graphical user interface.

15. The system according to claim 14, wherein the at least one runtime-modifiable configuration of the graphical user interface is or includes at least one uncompiled file, a text file or an XAML file as the at least one runtime-modifiable configuration of the graphical user interface.
